(19) Europäisches Patentamt
European Patent Office
Office européen des brevets

(11) Veröffentlichungsnummer: **0 477 595 A2**

# (12) EUROPÄISCHE PATENTANMELDUNG

(21) Anmeldenummer: **91114769.2**

(51) Int. Cl.⁵: $G06F \ 12/08$

(22) Anmeldetag: **02.09.91**

(30) Priorität: **26.09.90 DE 4030435**

(43) Veröffentlichungstag der Anmeldung:
**01.04.92 Patentblatt 92/14**

(84) Benannte Vertragsstaaten:
**AT DE ES FR GB IT NL**

(71) Anmelder: **SIEMENS AKTIENGESELLSCHAFT**
**Wittelsbacherplatz 2**
**W-8000 München 2(DE)**

(72) Erfinder: **Wahr, Alfons-Josef, Dipl.-Ing.**
**Pucher Strasse 52**
**W-8080 Fürstenfeldbruck(DE)**

(54) **Cachespeichereinrichtung mit m Busanschlüssen.**

(57) Die Cachespeichereinrichtung weist einen Cachespeicher auf, der k Port (k m) zum Lesen von Daten aus dem Cachespeicher bzw. p Ports (p m) zum Schreiben von Daten in den Cachespeicher (CSB) aufweist. Zwischen den Busanschlüssen (BA), die z.B. zu Prozessorelemente, einem Befehlswerk eines Prozessors und einem Hauptspeicher führen und dem Cachespeicher (CSB) ist ein Koppelfeld (KF) mit steuerbaren Koppelelementen (BK) zur Herstellung einer Verbindung der Cachespeicherports (WP, RP) mit den Busanschlüssen (BA) angeordnet. Mit Hilfe einer Cachespeichersteuerung (CCU) werden die Koppelelemente (BK) des Koppelfeldes so gesteuert, daß die Busanschlüsse (BA) auswählbar mit den Schreib- bzw. Leseports des Cachespeichers (CSB) verbindbar sind. Mit Hilfe des Koppelfeldes (KF) ist es möglich, die Anzahl der Ports des Cachsespeichers (CSB) kleiner zu wählen als die Anzahl der Busanschlüsse (BA), die auf den Cachespeicher zugreifen.

FIG 2

In der Rechnerarchitektur sind Cachespeicher bekannt. Sie dienen als Pufferspeicher zwischen miteinander kommunizierenden Funktionseinheiten unterschiedlicher Datenflußgeschwindigkeiten innerhalb einer Datenverarbeitungsanlage. Als Beispiel kann ein Befehlsprozessor angesehen werden, der aus einem Hauptspeicher die zu bearbeitenden Befehle Zur Verfügung gestellt erhält. Diese Befehle müssen dem Prozessor mit kürzerer Zugriffszeit bereitgestellt werden, als dies bei einem Hauptspeicher mit verhältnismäßig großer Speicherkapazität möglich ist. Um diesen Konflikt zu lösen, wird zwischen dem Hauptspeicher und dem Befehlsprozessor ein Cachespeicher als Pufferspeicher eingefügt, der eine kurze Zugriffszeit mit kleiner Speicherkapazität hat. Der Cachespeicher wird derart betrieben, daß die während eines Programmlaufs vom Befehlsprozessor angeforderten Daten und Befehle sich mit großer Wahrscheinlichkeit im Cachespeicher befinden und damit mit kurzer Zugriffszeit zur Verfügung gestellt werden können.

Um die Möglichkeiten der Hochintegration voll ausnutzen zu können und um die Leistungsfähigkeit der Prozessoren zu erhöhen, wird in der Rechnerimplementierung zunehmend neben dem Rechnerhardwarekern der Cachespeicher on chip integriert. Dabei ist zu beachten, daß die Kapazität des Cachespeichers zunehmend erhöht wird. Das führt dazu, daß ein Cachespeicher von einer einzigen CPU wirtschaftlich nicht mehr voll ausgelastet wird.

Die der Erfindung zugrundeliegende Aufgabe besteht darin, eine Cachespeichereinrichtung mit einem Cachespeicher anzugeben, bei dem der Cachespeicher nicht nur von einer CPU, sondern von mehreren CPU's verwendet werden kann. Diese Aufgabe wird gemäß den Merkmalen des Patentanspruchs 1 gelöst.

Der Cachespeicher kann aus einer Cachespeicherbank oder aus mehreren Cachespeicherbänken bestehen. Der Zugriff zu den Cachespeicherbänken erfolgt über interne Cachespeicherports, die als undirektionale oder als bidirektionaler Ports realisiert sein können. Wegen der Erfindung kann nun die Anzahl dieser Ports kleiner gewählt werden als die Anzahl der Busanschlüsse, die mit z.B. zu Einheiten eines Prozessors - wie CPU oder Prozessorelementen, Befehlswerk- oder zu einem Hauptspeicher führenden Bussen verbunden sind. Mit Hilfe des Koppelfeldes wird dann erreicht, daß jeder Busanschluß mit Ports des Cachespeichers verbindbar ist.

Das Koppelfeld kann auf übliche Weise realisiert sein als Verbindungsnetzwerk, Kreuzschienenverteiler oder Crossbar-Switch. Es enthält Koppelelemente, über die jeweils ein Busanschluß mit einem Port des Cachespeichers verbindbar ist. Es ist dabei zweckmäßig, die Ports des Cachespeichers i Worte breit zu wählen, so daß über eine entsprechende Steuerung der Koppelelemente parallel mehrere Busanschlüsse mit einem oder mehreren Cachespeicherports verbindbar sind.

Anhand von Ausführungsbeispielen, die in den Figuren dargestellt sind, wird die Erfindung weiter erläutert. Es zeigen

Figur 1      ein Blockschaltbild eines Prozessors mit mehreren Prozessorelementen,

Figur 2      eine erste Realisierung der Cachespeichereinrichtung,

Figur 3      eine zweite Realisierung der Cachespeichereinrichtung,

Figur 4      eine dritte Realisierung der Cachespeichereinrichtung.

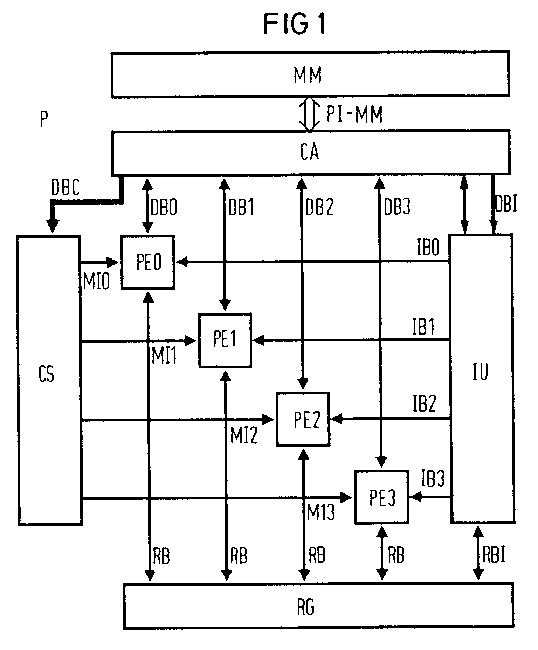

Nach Figur 1 besteht ein Prozessor P aus n Prozessorelementen (auch Rechenwerk oder CPU genannt), im Ausführungsbeispiel vier Prozessorelementen PE0 bis PE3, einer Cachespeichereinrichtung CA, einem Befehlswerk IU, einer Registerbank RG und eventuell aus einem Steuerspeicher CS. Der Prozessor P ist über die Cachespeichereinrichtung CA mit einem Hauptspeicher MM verbunden.

Die Prozessorelemente PE0 bis PE3 sind über Busse DB0 bis DB3 mit der Cachespeichereinrichtung CA verbunden, sie sind weiterhin über IB0 bis IB3 mit dem Befehlswerk IU, über Registerbusse RB mit der Registerbank RG und über Leitunen MI0 bis MI3 mit dem Steuerspeicher CS verbunden. Im Steuerspeicher CS können die Mikroprogramme stehen, die für die Funktion der Prozessorelemente PE0 bis PE3 erforderlich sind. Das Befehlswerk IU kann ebenfalls mit dem Cachespeicher CA verbunden sein, ebenso wie der Hauptspeicher MM über den BUS PI-MM. Weiterhin ist es möglich, daß das Befehlswerk IU mit der Registerbank RG über einen Bus RBI verbunden ist.

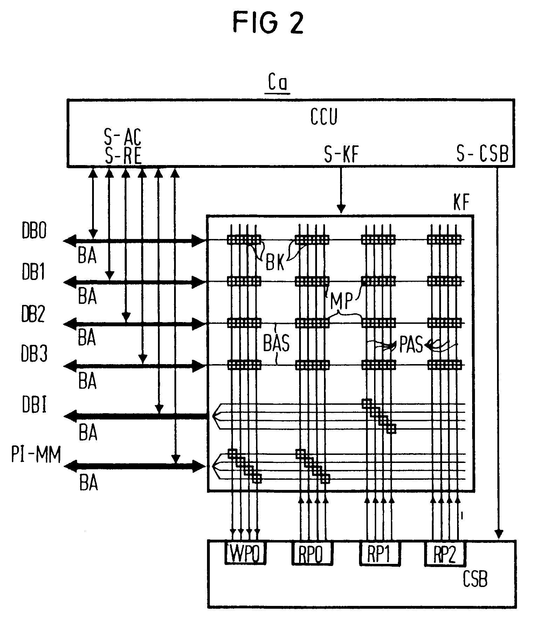

Vom Prozessor P soll im folgenden der Aufbau der Cachespeichereinrichtung CA erläutert werden. Die Cachespeichereinrichtung besteht nach Figur 2 aus einem Cachespeicher CSB, einem Koppelfeld KF und einer Cachespeichersteuerung CCU. Der Cachespeicher CSB kann aus einer Speicherbank oder aus mehreren Speicherbänken bestehen und ist von bekanntem Aufbau. Der Cachespeicher CSB sieht Cachespeicherports WP0, RP0, RP1, RP2 vor, die im Ausführungsbeispiel undirektional realisiert sind. Der Port WP0 (es können auch mehrere Schreibports sein) dient zum Beschreiben des Cachespeichers, die Ports RP0 bis RP2 zum Lesen aus dem Cachespeicher. Die Cachespeicherports bilden die Schnittstelle des Cachespeichers CSB mit einem Koppelfeld KF.

Das Koppelfeld KF besteht aus Koppelelementen BK, die an den Matrixpunkten MP des Koppelfeldes KF angeordnet sind. An diesen Matrixpunkten MP treffen sich Portanschlußleitungen PAS mit Busanschlußleitungen BAS, an deren Busanschlüsse BA die Busse DB der Prozessorelemente PE, der Bus PI-MM zum Hauptspeicher MM und der Befehlsbus DBI zum Befehlswerk IU angeschlossen ist. Mit Hilfe der Koppelelemente BK können somit die Busse mit den Ports verbunden werden.

Die Busse können die Breite eines Wortes haben oder die Breite von mehreren Worten, entsprechendes gilt für die Cachespeicherports. Auch diese können die Breite eines Wortes haben oder die Breite von mehreren Worten. Im Ausführungsbeispiel der Figur 2 wird z.B. angenommen, daß die Busse DB0 ... DB3 ein Wort breit sind, während die Busse DBI und PI-MM sowie die Ports vier Wort breit sind. Allgemein sind die Busse i-Worte breit, die Ports j-Worte breit (i,j sind ganze Zahlen).

Die Steuerung der Koppelelemente BK erfolgt mit Hilfe der Cachespeichersteuerung CCU. Diese erzeugt Steuersignale S-KF, die dem Koppelfeld KF zugeführt werden und dort die einzelnen Koppelelemente BK ansteuern. Dazu erhält die Cachespeichersteuerung CCU Steuersignale S-RE, Request Signale, über die Busse DB, DBI, PI-MM, die sie dann mit S-AC quittiert, wenn ein Zugriff zum Cachespeicher CSB durchführbar ist. Die dazu erforderliche Steuerung des Cachespeichers CSB erfolgt über Steuersignale S-CSB.

In Figur 2 ist eine erste Realisierung des Koppelfeldes KF dargestellt. An den Matrixpunkten MP des Koppelfeldes KF befinden sich ebenso viele Koppelelemente BK, wie die Cachespeicherports Wortbreite aufweisen. Da im Ausführungsbeispiel die Cachespeicherports vier Worte breit sind, sind an den Matrixpunkten MP jeweils vier Koppelelemente BK angeordnet. Da diese Koppelelemente pro Matrixpunkt MP getrennt ansteuerbar sind, ist es möglich, daß parallel bis zu vier Worte über ein Cachespeicherport zum Cachespeicher CSB übertragen werden bzw. dort gelesen werden. Zum Schreiben wird dabei der Cachespeicherport WP0, zum Lesen die Cachespeicherports RP0 bis RP2 verwendet.

Die Anzahl p der für die Prozeßelemente PE notwendigen Schreibports WP kann mit Hilfe folgender Formel abgeschätzt werden:

$$p \approx round\ [[\ w_w\ +\ w_{w\text{-}Miss}\ *\ t_{w\text{-}La}\ ]\ *\ n\ *\ w_{PBi}\ /f]\qquad(1)$$

Dabei bedeutet p die Anzahl der Schreibports am Cachespeicher CSB, $w_w$ die Schreibzugriffswahrscheinlichkeit, $W_{w\text{-}Miss}$ die Wahrscheinlichkeit des Cachespeichermisses, $t_{w\text{-}La}$ die Schreibzugriffszeit auf den Hauptspeicher MM, $W_{PBi}$ die mittlere Zugriffswahrscheinlichkeit des externen Busses DB, n die Anzahl der angeschlossenen Prozessorelemente PE, f Parallelitätsfaktor (wieviele Zugriffe sind im Mittel pro Port möglich).

Zum Beispiel kann $w_w$ = 0,2, $w_{w\text{-}Miss}$ = 0,1, $t_{w\text{-}La}$ = 4, $W_{PBi}$ = 0,5 und f = 4 gewählt werden. Dann ergibt sich, daß ein p = 1 Schreibport ungefähr erforderlich ist.

Die Anzahl k der Leseports RP kann in entsprechender Weise berechnet werden nach der Formel (2):

$$k\ round\ [[\ w_r\ +\ w_{r\text{-}Miss}\ *\ t_{r\text{-}La}\ ]\ *\ n\ *\ w_{PBi}/f\ ]\qquad(2)$$

dabei bedeutet k Anzahl der Lese-Ports an dem Cachespeicher CSB, $w_r$ Lesezugriffswahrscheinlichkeit, $w_{r\text{-}Miss}$ Wahrscheinlichkeit des Cachespeicher-Misses, $t_{r\text{-}La}$ Lesezugriffszeit auf den Hauptspeicher, $W_{PBi}$ mittlere Zugriffswahrscheinlichkeit der Datenbusse DB, n Anzahl der angeschlossenen Prozessorelementen PE, f Parallelitätsfaktor.

Als Beispiel könnte gewählt werden:
$w_r$ = 0,8, $w_{r\text{-}Miss}$ = 0,1, $t_{r\text{-}La}$ = 4, n = 4, $W_{PBi}$ = 0,5 f = 2. Dann würde sich als ungefähre Anzahl von Leseports RP K = 1 ergeben.

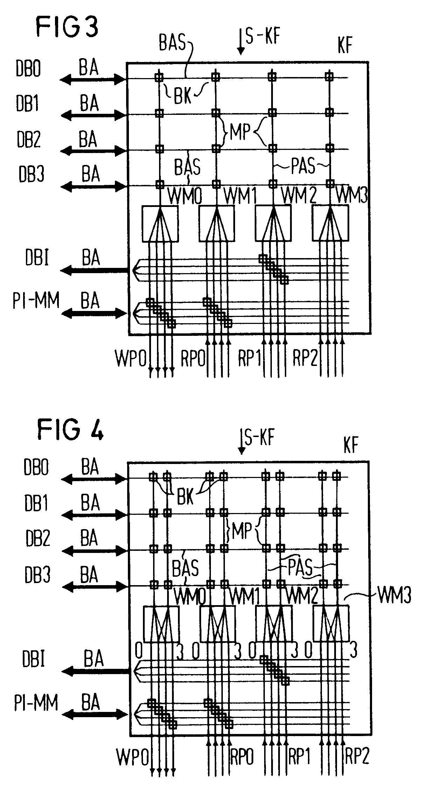

Eine weitere Realisierung des Koppelfeldes KF ergibt sich aus Figur 3. Hier ist pro Matrixpunkt MP jeweils nur ein Koppelelement BK vorgesehen, das die Busanschlußleitungen BAS mit den Cachespeicherports verbinden kann. Die Aufteilung der zu übertragenden Worte auf die mehrere Worte breiten Cachespeicherports erfolgt mit Hilfe von Multiplexern WM. Mit dieser Realisierung wird an Anzahl der Koppelelemente BK eingespart und damit der Aufwand erheblich verringert.

Eine weitere Lösungsmöglichkeit kann der Figur 4 entnommen werden. Hier sind pro Matrixpunkt des Koppelfeldes KF zwei Koppelelemente BK vorgesehen, über die jede Busanschlußleitung BAS mit zwei Portanschlußleitungen koppelbar ist. Die Aufteilung auf die vier Wort breiten Ports erfolgt wiederum mit Hilfe von Multiplexern WM.

Es ist zweckmäßig, wenn dem Befehlswerk IU ein eigener Leseport, z.B. RP1 zur Verfügung steht, auf den dann die Prozessorelemente PE nicht oder nur mit niederer Priorität zugreifen können. Entsprechendes gilt auch für den Hauptspeicher MM, um unabhängig von den Prozessorelementen PE ein Datum vom Cachespeicher in den Hauptspeicher MM schreiben zu können, ist ein unabhängiger Leseport, z.B. RP0, günstig. Ebenso kann ein eigener Schreibport vorgesehen werden.

Die Cachespeichersteuerung CCU steuert das Koppelfeld KF mit Hilfe der Steuersignale S-KF und den Cachespeicher CSB mit Hilfe der Steuersignale S-CSB. Weiterhin werden die von den Bussen DB der Cachespeichersteuerung CCU zugeführten Steuersignale, wie Requestsignale S-RE bearbeitet und dabei mögliche Zugriffskonflikte lokalisiert und behoben. Die von den Prozessorelementen PE ankommenden Requestsignale S-RE werden gemäß der festgelegten Priorität verarbeitet. Durch Steuerung der Koppelelemente BK können auf einen i-Worte breiten Port zwei oder mehr, maximal i, Zugriffe parallel erfolgen. Die Wortadressen für jedes Wort werden von den Bussen zu den Cachespeicherports durchgeschaltet. Die Anforderungen S-RE werden von der Cachespeichersteuerung mit S-AC quittiert. Im Missfall wird ein notwendiger Hauptspeicherzugriff ausgelöst und das neue Datum in den Cachespeicher CSB übertragen.

Zum Betrieb der Cachespeichersteuerung CCU sind somit Steuersignale vorgesehen, die von den Bussen DB bzw. PI-MM zur Cachespeichersteuerrung führen bzw. von dort zum Koppelfeld, zum Cachespeicher CSB oder zu den Datenbussen DB, PI-MM. Zum Beispiel mit Hilfe eines in der Cachespeichersteuerung enthaltenen Mikroprogramms können die entsprechenden Steuersignale ausgelöst werden.

Die Koppelelemente können Buskoppler von bekanntem Aufbau sein. Sie müssen geeignet sein, ein j wortbreites Datum auf den Bussen durchzuschalten. Wenn im Ausführungsbeispiel die Busse ein Wort breit sind und z.B. das Wort 36 Bit aufweist, muß das Koppelelement 36 Bit schalten können. Die Koppelelemente KE für den Befehlsbus DBI und den Speicherbus PI-MM können entsprechend den Figuren angeordnet sein, so daß es möglich ist, ein i-Wort breites Informationswort aus dem Cachespeicher CSB zu lesen bzw. in ihn hineinzuschreiben. Die Cachespeicherports können auf übliche Weise aufgebaut sein.

**Patentansprüche**

1. Cachespeichereinrichtung mit m Busanschlüssen (BA) mit
   - einem Cachespeicher (CSB) mit k (k m) Cachespeicherports (RP) zum Lesen von Daten aus dem Cachespeicher (CSB) und p (p m) Cachespeicherports (WP) zum Schreiben von Daten in den Cachespeicher,
   - einem Koppelfeld (KF) mit steuerbaren Koppelelementen (BK) zur Herstellung einer Verbindung der Cachespeicherports mit den Busanschlüssen (BA),
   - einer Cachespeichersteuerung (CCU) zur Steuerung der Koppelelemente (BK) des Koppelfeldes (KF).

2. Cachespeichereinrichtung nach Anspruch 1,
   dadurch **gekennzeichnet,**
   daß ein Hauptspeicher (MM) des Prozessors (P) über einen Speicherbus (PI-MM) mit dem Koppelfeld (KF) verbunden ist.

3. Cachespeichereinrichtung nach Anspruch 1 oder 2,

dadurch **gekennzeichnet,**
daß Einheiten (IU,PE) eines Prozessors (P) über einen Bus (DB) mit dem Koppelfeld (KF) verbunden ist.

4. Cachespeichereinrichtung nach einem der vorhergehenden Ansprüche,
   dadurch **gekennzeichnet,**
   daß der Cachespeicher (CSB) aus getrennt ansteuerbaren Cachespeicherbänken besteht.

5. Cachespeichereinrichtung nach einem der vorhergehenden Ansprüche,
   dadurch **gekennzeichnet,**
   daß durch die Koppelelemente (BK) Busanschlüsse (BA) parallel zu dem Cachespeicher (CSB) schaltbar sind.

6. Cachespeichereinrichtung nach Anspruch 5,
   dadurch **gekennzeichnet,**
   daß jeder Port des Cachespeichers i Worte breit ist und daß die Busse j Worte breit sind und daß parallel maximal i Worte von im Prozessor enthaltenen Prozessorelementen (PE) zum Cachespeicher schaltbar sind.

7. Cachespeichereinrichtung nach einem der Ansprüche 2 - 6,
   dadurch **gekennzeichnet,**
   daß das Koppelfeld (KF) aus einer Matrix mit Koppelelementen (BK) an den Matrixpunkten (MP) besteht, und daß die Zeilen von Koppelelementen (BK) an die Busanschlüsse (BA) angeschlossen sind, die Spalten die Portanschlußleitungen (PAS) der Cachespeicherports sind.

8. Cachespeichereinrichtung nach Anspruch 7,
   dadurch **gekennzeichnet,**
   daß an den Matrixpunkten (MP) i-Koppelelemente (BK) zur Verbindung von j Wort breiten Busanschlußleitungen mit den i Wort breiten Portanschlußleitungen (PAS) angeordnet sind.

9. Cachespeichereinrichtung nach Anspruch 7,
   dadurch **gekennzeichnet,**
   daß pro Matrixpunkt (MP) ein Koppelelement (KE) vorgesehen ist, daß zwischen den Cachespeicherports und den Portanschlußleitungen ein Wortmultiplexer (WM) angeordnet ist, der das j Wort breite Wort auf die i Wort breiten Cachespeicherports verteilt.

10. Cachespeichereinrichtung nach Anspruch 7,
    dadurch **gekennzeichnet,**
    daß pro Matrixpunkt (MP) zwei (oder mehr) Koppelelemente (KE) vorgesehen sind, daß zwischen den Cachespeicherports und den Portanschlußleitungen pro Spalte von Koppelementen ein Wortmultiplexer (WM) angeordnet ist, der die zwei (oder mehrere) Portanschlußleitungen auf die i Wort breiten Cachespeicherports verteilt.

11. Cachespeichereinrichtung nach einem der Ansprüche 7 bis 10,
dadurch **gekennzeichnet,**
daß getrennte Schreibports (WP) und Leseports (RP) vorgesehen sind.

12. Cachespeichereinrichtung nach Anspruch 11,
dadurch **gekennzeichnet,**
daß die Anzahl P der Schreibports nach der Formel

$$p \approx \text{round} \; [[ \; w_w \; + \; w_{w\text{-Miss}} \; ^* \; t_{w\text{-La}} \; ] \; ^* \; n \; ^* \; w_{PBi} \; /f \; ] \quad (1)$$

festgelegt wird, wobei gilt:

p = Anzahl der Schreibports, $w_w$ = Schreibzugriffswahrscheinlichkeit, $w_{w\text{-Miss}}$ Wahrscheinlichkeit eines Cachespeicher-Misses, $t_{w\text{-La}}$ Schreibzugriffswahrscheinlichkeit auf den Hauptspeicher, $W_{PBI}$ Schreibzugriffswahrscheinlichkeit der PE Busse, n Anzahl der PE, f Parallelitätsfaktor -wieviele Zugriffe sind im Mittel pro Port möglich.

13. Speichereinrichtung nach Anspruch 11,
dadurch **gekennzeichnet,**
daß die Anzahl k der Leseports nach der Formel:

$$K \approx \text{round} \; [[ \; w_r \; + \; w_{r\text{-Miss}} \; ^* \; t_{r\text{-La}} \; ] \; ^* \; n \; ^* \; w_{PBi} \; /f \; ] \quad (2)$$

bestimmt wird, wobei gilt:
k Anzahl der Leseports, $w_r$ Lesezugriffswahrscheinlichkeit, $w_{r\text{-Miss}}$ Wahrscheinlichkeit eines Cachespeichermisses, $t_{r\text{-La}}$ Lesezugriffszeit auf den Hauptspeicher, $W_{PBi}$ mittlere Zugiffswahrscheinlichkeit der PE Busse, n Anzahl der PE, f Parallelitätsfaktor (wieviele Zugriffe sind im Mittel pro Port möglich).

14. Cachespeicheinrichtung nach einem der vorhergehenden Ansprüche,
dadurch **gekennzeichnet,**
daß für das Befehlswerk (IU) ein eigener Leseport beim Cachespeicher vorgesehen ist.

15. Cachespeichereinrichtung nach einem der vorhergehenden Ansprüche,
dadurch **gekennzeichnet,**
daß für den Hauptspeicher (MM) ein eigener Leseport bzw. Schreibport des Cachespeichers vorgesehen ist.

# FIG 1

# FIG 2

FIG 3

FIG 4